(19) Europäisches Patentamt
European Patent Office
Office européen des brevets

(11) **EP 3 736 189 B1**

(12) **EUROPEAN PATENT SPECIFICATION**

(45) Date of publication and mention
of the grant of the patent:
**15.09.2021  Bulletin 2021/37**

(51) Int Cl.:
***B60T 15/18*** *(2006.01)*

(21) Application number: **20165716.0**

(22) Date of filing: **25.03.2020**

(54) **DISTRIBUTOR AND OLEODYNAMIC BRAKING SYSTEM FOR AN AGRICULTURAL OR FORESTRY VEHICLE**

VERTEILER UND OLEODYNAMISCHES BREMSSYSTEM FÜR LANDWIRTSCHAFTLICHES FAHRZEUG

DISTRIBUTEUR ET SYSTÈME OLEODYNAMIQUE DE FREINAGE POUR VÉHICULE AGRICOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2019  IT 201900004361**

(43) Date of publication of application:
**11.11.2020  Bulletin 2020/46**

(73) Proprietor: **Slanzi Oleodinamica S.r.l.**
**42017 Novellara (IT)**

(72) Inventors:
• **ANNONI, Matteo**
  **42017 NOVELLARA (RE) (IT)**
• **IOTTI, Andrea**
  **42017 NOVELLARA (RE) (IT)**
• **VENTURI, Luca**
  **42017 NOVELLARA (RE) (IT)**

(74) Representative: **Cataldi, Giulia et al**
**Studio Torta S.p.A.**
**Via Viotti, 9**
**10121 Torino (IT)**

(56) References cited:
**EP-A1- 0 400 432     EP-A1- 3 000 672**
**EP-A1- 3 085 590     EP-A1- 3 202 629**
**EP-A1- 3 243 715     WO-A1-94/10018**

**Description**

PRIORITY CLAIM

This application claims priority from Italian Patent Application No. 102019000004361 filed on 26/03/2019.

TECHNICAL FIELD

The present invention relates to an oleodynamic braking distributor and system for an agricultural or forestry vehicle.

In particular, the present invention finds advantageous application in an oleodynamic braking distributor and system which comply with the EU 167/2013 regulation which concerns the provisions relating to vehicle braking for the purposes of homologation of agricultural and forestry vehicles (hereinafter EU 167/2013 regulation) and relating to the braking of towed vehicles.

The EU 167/2013 regulation requires, among other things, that an agricultural or forestry vehicle has a main line crossed by high-pressure oil and a secondary line crossed by low-pressure oil separated from each other so that a line can guarantee the braking of the towed vehicle also in case of malfunction of the other.

The EU 167/2013 regulation also requires specific specifications relating to the braking timing and methods of the towed vehicle in the event of a breakdown.

The EU 167/2013 regulation also provides for a transitional period, during which it is still possible to use towed vehicles that follow the regulations prior to 2016 or controlled by a single pressure line.

PRIOR ART

Oleodynamic braking distributors for an agricultural or forestry vehicle for delivering fluid under pressure to towed vehicles are known, for example from EP0400432 A1, however these types of distributors are controlled by a single line under pressure.

Oleodynamic braking distributors for an agricultural or forestry vehicle for delivering fluid under pressure to towed vehicles are known, for example from EP3202629 A1, however these types of distributors do not allow remote control.

DESCRIPTION OF THE INVENTION

The object of the present invention is to provide an oleodynamic braking distributor and system for an agricultural or forestry vehicle which comply with the requirements of the EU 167/2013 regulation.

In particular, the object of the present invention is to provide an oleodynamic braking distributor and system which comprise a main line and a secondary line separate from each other (according to the provisions of the EU 167/2013 regulation) and an automatic system for operating an emergency braking system in case of fault detection on a line.

The object of the present invention is to provide an oleodynamic braking distributor and system which can also be used for towed vehicles made according to the regulations prior to 2016, which provides only one pressure line for towed vehicles. In other words, the object of the present invention is to provide an oleodynamic braking distributor and system which can be used independently on board towed vehicles made both according to the EU 167/2013 regulation and according to the previous regulation.

The object of the present invention is to provide an improved oleodynamic distributor and system.

According to the present invention, a brake valve, an oleodynamic braking distributor and system are provided according to what is mentioned in the appended claims.

BRIEF DESCRIPTION OF THE DRAWINGS

The invention will now be described with reference to the accompanying drawings, which show some non-limiting embodiment examples thereof, wherein:

- Figure 1 is a schematic view of a forestry agricultural vehicle coupled to a vehicle towed with a remote distributor;

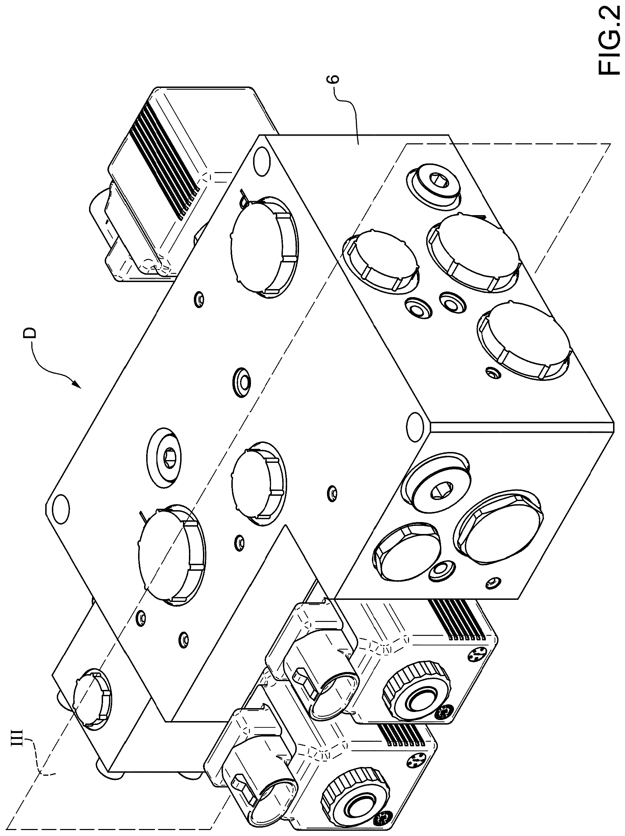

- Figure 2 is a perspective view of an oleodynamic distributor according to the present invention;
- Figure 3 is a section according to plane III of Figure 2;
- Figure 4 is an enlargement of Figure 3; and
- Figure 5 is a hydraulic diagram of an oleodynamic system comprising a distributor according to Figure 2; and
- Figure 6 is a schematized figure which shows the detail of Figure 4 in an operating configuration;
- Figures 7 and 8 show a detail of Figure 6 in respective different operating configurations.

BEST MODE FOR CARRYING OUT THE INVENTION

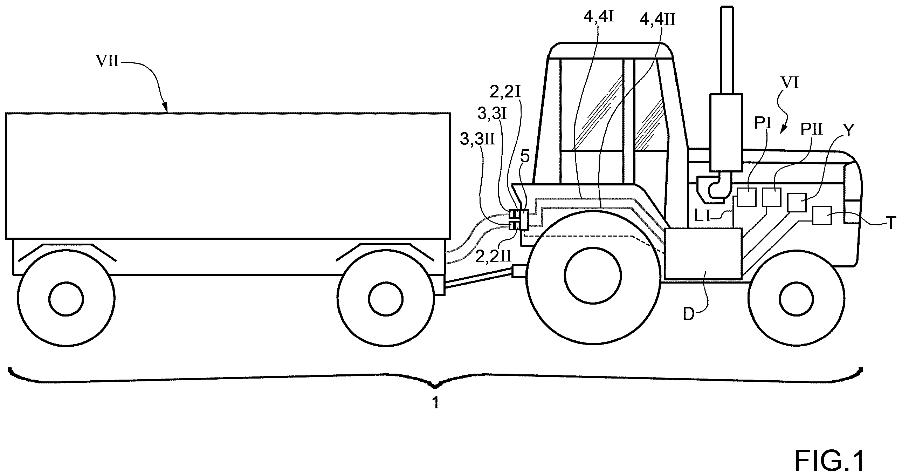

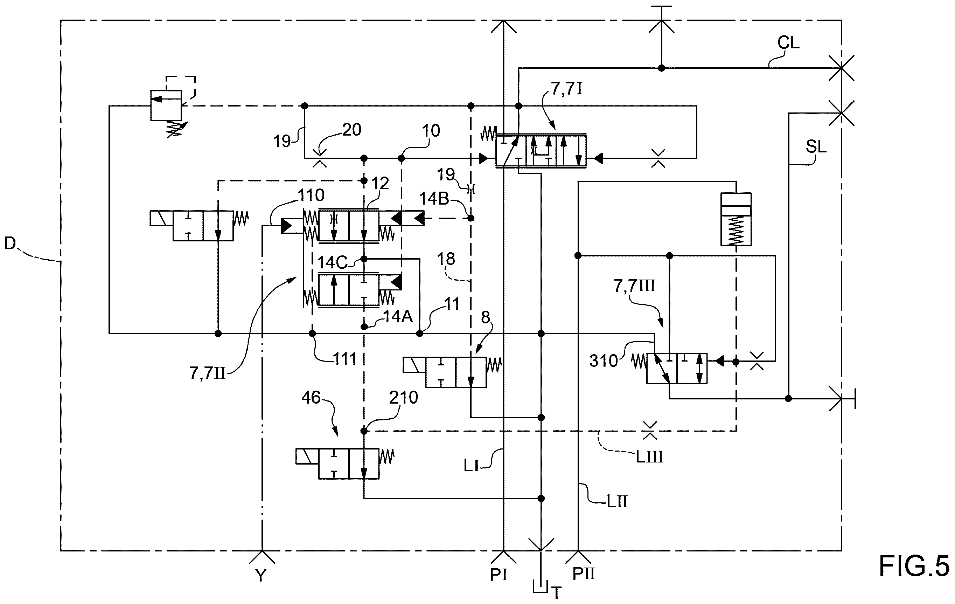

In Figure 1, reference VI shows an agricultural or forestry vehicle for braking a towed vehicle VII coupled to the agricultural or forestry vehicle VI. In particular, a distributor D is a component of an oleodynamic braking system 1 (illustrated schematically in Figure 5) of the vehicle VI.

In a known manner, the vehicle VI has a control delivery Y of oil under pressure of the braking system of the vehicle VI. Generally, the control delivery Y is regulated by the brake pedal of the agricultural or forestry vehicle VI.

In particular, the system 1 comprises, in a known manner, a main high-pressure oil delivery PI, an additional low-pressure oil delivery PII and a discharge T. The main delivery PI is configured to supply oil at a pressure up to about 150 bar to a main line LI. The additional delivery PII is configured to supply oil at a pressure up to about 30 bar to an additional line LII. It should be noted that I and II identify the elements connected to the main line LI and to the additional line LII, respectively, below and in the Figures.

According to what is shown schematically in Figure 1, the system 1 comprises, in a known manner, attachments 2 configured to hydraulically connect, in use, to respective joints 3 of a towed vehicle VII. Obviously, if the towed vehicle VII has a single oil line, only a single attachment 2 will be connected to a corresponding joint 3 of the towed vehicle VII.

On the other hand, if the towed vehicle VII has two oil lines, both attachments 2 of the distributor D will be connected to the respective joints 3.

According to the example illustrated in Figure 1, the distributor D is installed in any position of the agricultural vehicle VI, even distant from the attachments 2, which are generally located in a rear position of the vehicle VI. In other words, the distributor D is connected remotely, i.e. remote. In this case, the system 1 is provided with lines 41, 411, each connecting a respective attachment 21, 211 with the distributor D.

According to a variant, not shown, the distributor D is placed at the rear in the vicinity of the attachments 2. In this case, the attachments 2 are advantageously connected directly mechanically with the distributor D.

Advantageously, the system 1 comprises a presence detector 5, which is configured to determine how many joints 3 are connected to the system 1. In other words, the presence detector 5 determines whether the towed vehicle VII has one line or two lines of oil under pressure.

The presence detector 5 can be selected from a group of presence detectors 5 which are different from each other by type. For example, the presence detector 5 can be: electric, mechanical, hydraulic, pneumatic, magnetic, electromagnetic, and the like.

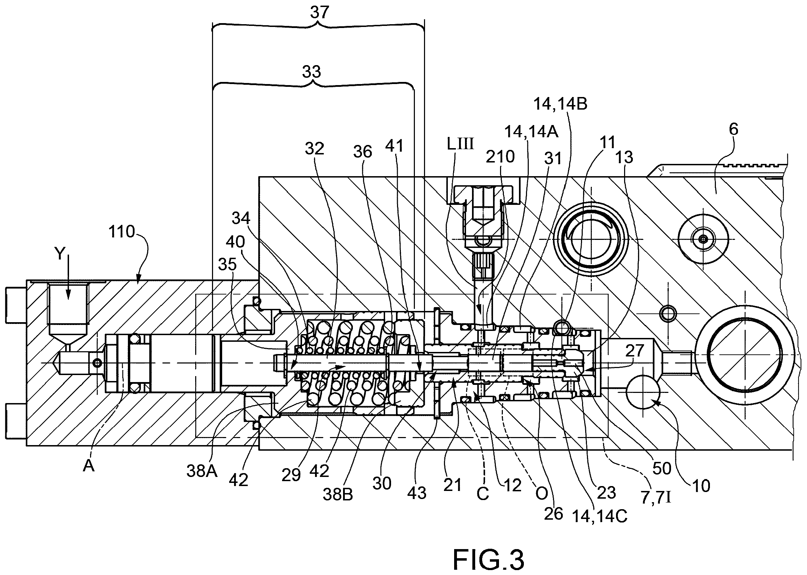

According to what is shown in Figure 3, the distributor D comprises a body 6 inside which chambers and lines are formed for housing valves and, respectively, for the passage of oil.

As shown in the diagram of Figure 5, the distributor D comprises:

- a main servo-valve 71 arranged along the main line LI for delivering, in use, high-pressure oil to the towed vehicle VII through a control line CL;
- a drive cartridge 711 arranged to check the operation of the main servo-valve 71;
- a drive assembly 110, which receives the pressure of the control delivery Y and transforms it into an axial thrust necessary to control the drive cartridge 711;
- an additional brake valve 7III arranged along the additional line LII for delivering, in use, low-pressure oil to a towed vehicle VII according to the EU 167/2013 regulation through a secondary line SL.

The distributor D furthermore comprises a selection valve 8 which is configured to operate the drive cartridge 711, according to the type of towed vehicle VII coupled to the vehicle VI. The selection valve 8 can be operated in any way: electrically, pneumatically, hydraulically, mechanically, magnetically, and the like.

According to the illustrated example, the selection valve 8 is a solenoid valve and is operated remotely, in particular the presence detector 5 emits a signal which is used, directly or through a control unit (not shown), to operate the selection valve 8 itself.

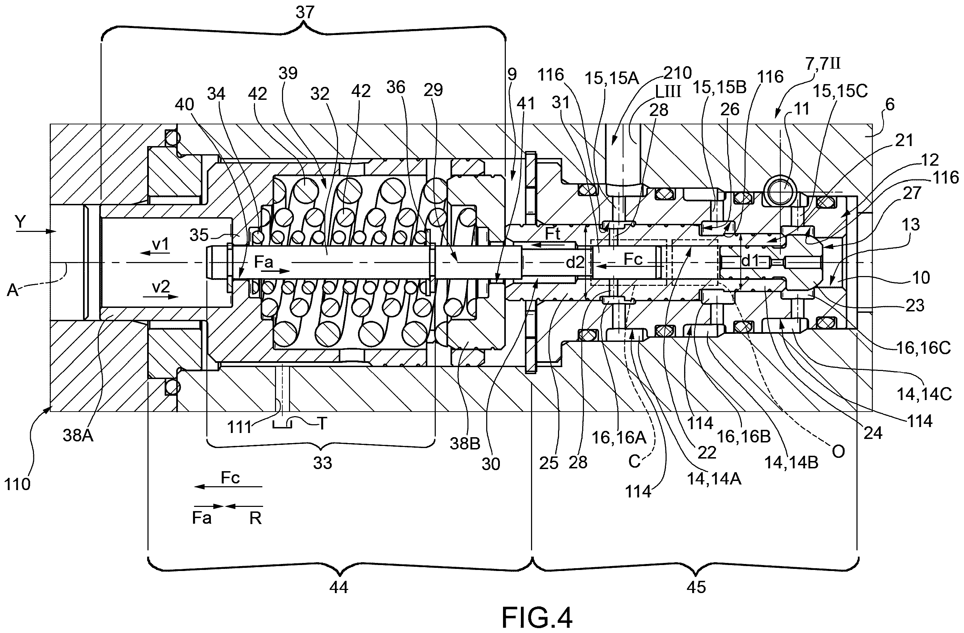

According to what is shown in Figures 3 and 4, the drive cartridge 711 is a slide valve.

The embodiment of the drive cartridge 7II shown in Figures 3 and 4 is described in detail below.

The drive cartridge 711 is formed inside a main dispensing chamber 9 of the distributor D.

The main dispensing chamber 9 has a longitudinal axis A.

Advantageously, the main dispensing chamber 9 has a main dispensing inlet 10 for high-pressure oil, fed by the main delivery PI, and a main dispensing outlet 11 for delivering, in a known manner, high-pressure oil to the towed vehicle VII connected to the agricultural or forestry vehicle VI. In Figures 3 and 4, the main dispensing outlet 11 connects the main dispensing chamber 9 with the discharge T.

The drive cartridge 711 also comprises a dispensing seat 12. It should be noted that the term seat refers to a cylindrical body configured to implement specific hydraulic connections inside a respective chamber.

According to the illustrated example, the dispensing seat 12 is coaxial to the longitudinal axis A. According to the illustrated example, the dispensing seat 12 has a central through cavity 13 which crosses longitudinally, and in its entirety, the dispensing seat 12 itself. According to a variant not shown, the dispensing seat 12 can be solid, i.e. not have the central cavity 13, and manage the directing of the oil by other means, for example outer shapes or transverse holes.

According to the illustrated example, the main dispensing chamber 9 has a plurality of chambers 14, i. e. areas in fluid communication with the outside. Each chamber 14 is substantially delimited by an annular groove 114 made on the outside of the dispensing seat 12. The chambers 14 of the dispensing seat 12 are hereinafter identified as signal chamber 14A, selection chamber 14B and discharge chamber 14C. The chambers 14 are distributed axially along the dispensing seat 12. The selection chamber 14B is axially interposed between the signal chamber 14A and the discharge chamber 14C.

The dispensing seat 12 has at least one radial channel 15 for each chamber 14. Each radial channel 15 puts in fluid communication the central cavity 13 with a respective inner chamber 16. Hereinafter and in the figures, the channels are identified with letters A, B and C according to the chamber 14 with which they are in communication.

Each inner chamber 16 is substantially by an annular groove 116 made inside the dispensing seat 12.

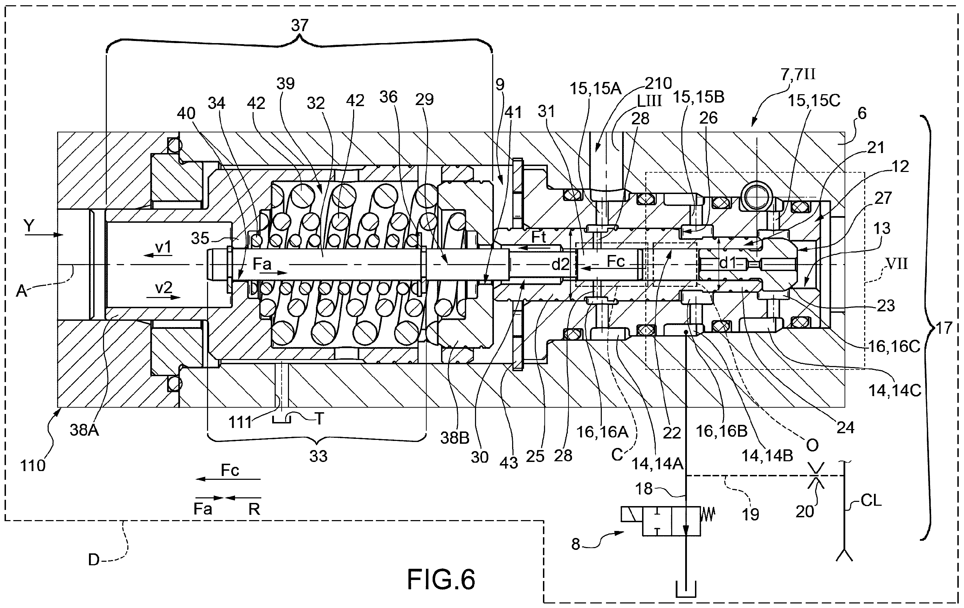

According to the example illustrated in greater detail in Figures 4 and 6, the dispensing seat 12 is interposed between the main delivery inlet 10 for high-pressure oil and the main delivery outlet 11. In other words, in use, the oil in order to flow from the main delivery inlet 10 to the main delivery outlet 11 passes through the dispensing seat 12. In particular, in use, the oil passes through the inner chamber 16C, the radial channel 15C and the discharge chamber 14C of the dispensing seat 12 to pass from the main delivery inlet 10 to the main delivery outlet 11.

Advantageously, the signal chamber 14A is in fluid communication with a parking oil line LIII.

The signal chamber 14A is in communication with an oil inlet 210 at a parking pressure. Advantageously, the drive cartridge 711 is configured to put the oil coming from the parking inlet 210 in communication with a secondary delivery outlet 111, when the pressure of the oil coming from the main delivery PI is below a predefined value. The secondary delivery outlet 111 is in communication with the discharge T. Advantageously, the selection valve 8 is configured to selectively connect the selection chamber 14B with the discharge T or with the main line LI.

According to the example schematically shown in Figure 6, the selection valve 8 is part of a switching system 17, which comprises a passage channel 18 which connects the selection chamber 14B with the selection valve 8 and a drive line 19 which connects the passage channel 18 with the control line CL. A calibrated orifice 20 is made along the drive line 19, which allows the oil to leak from the main line LI to the passage channel 18. The selection valve 8 selectively opens and closes the passage channel 18.

The drive line 19 is in fluid communication with the passage channel 18 in an intermediate position between the selection chamber 14B and the selection valve 8.

When the selection valve 8 is open, the passage channel 18 is connected to the discharge T and, consequently, the selection chamber 14B is also connected to the discharge T. Furthermore, the oil which leaks from the drive line 19 is in turn directed to the discharge T.

When the selection valve 8 is closed, the oil which leaks from the drive line 19 fills the passage channel 18 and the selection chamber 14B. Therefore, the selection chamber 14B is brought to the same pressure as the control line CL.

Variants to the switching system 17 described above can be provided. For example, according to what is illustrated in Figures 3 and 4, the drive cartridge 711 comprises a pin 21 which is slidably mounted axially inside the central cavity 13 of the dispensing seat 12. As an alternative to the drive line 19 and the calibrated orifice 20, a clearance can be provided between the pin 21 and the main dispensing seat 12, so as to allow a leakage of oil from the main line LI to the selection chamber 14B. Also in this case, the selection chamber 14B can be connected to the discharge T by means of the selection valve 8.

According to the example illustrated in Figures 3 and 4, the signal chamber 14A is in communication with a parking oil line LIII, as will be better illustrated below (it is noted that a towed vehicle VII according to the EU 167/2013 regulation comprises a parking braking system, of a known type and not shown, which is configured to block the wheels of the towed vehicle VII when it is not supplied with pressurized oil).

Advantageously, the drive cartridge 711 also integrates the self-diagnosis and emergency braking system, as will be better illustrated below.

Advantageously, the pin 21 has an inner cavity 22. The pin 21 comprises a calibrated dowel 23 which has a passage hole 50 and allows the oil to leak from the main inlet 10 into the inner cavity 22. The calibrated dowel 23 is applied to an axial end of the pin 21. The calibrated dowel 23 faces the main delivery inlet 10.

Advantageously, the pin 21 has a double diameter. In other words, the pin 21 comprises a smaller shutter 24 having an outer diameter d1 and a larger shutter 25 having an outer diameter d2, wherein d1<d2. In other words, the larger shutter 25 projects radially outside the smaller shutter 24.

The pin 21 has an outer thrust surface 26 substantially perpendicular to the axis A. The outer thrust surface 26 is shaped as a circular crown and is at the passage between the smaller shutter 24 and the larger shutter 25.

The smaller shutter 24 is axially interposed between the larger shutter 25 and the main delivery inlet 10.

The calibrated dowel 23 is applied to a free end of the smaller shutter 24. The calibrated dowel 23 has an axial thrust surface 27 facing the main delivery inlet 10.

The pin 21 is inserted into the main dispensing seat 12, so that the outer thrust surface 26 faces the inner selection chamber 16B. Advantageously, as will be better illustrated hereinafter, the total thrust R which develops on the pin 21 changes, in use, according to whether the selection chamber 14B is connected to the control line CL or to the discharge T.

The pin 21 also has a radial hole 28 which connects the inner cavity 22 of the pin 21 with the outside. In particular, the radial hole 28 faces the outside of the pin 21 along the larger shutter 25 and is in communication with the inner signal chamber 16A. The pin 21 can have a plurality of radial holes 28 uniformly distributed radially around the axis A and at the same axial sector of the pin 21.

In particular, each radial hole 28 puts the oil inlet 210 at the parking pressure in communication with the inner cavity 22. The oil inlet 210 at the parking pressure is in fluid connection with the secondary delivery outlet 111 through the inner cavity 22.

Advantageously, the drive cartridge 7II further comprises a slider 29 which is mounted axially sliding inside the inner cavity 22 of the pin 21. The slider 29 is movable from a closed position C (indicated with a dotted line in Figures 3 and 4) to an open position O (indicated with a dotted line in Figures 3 and 4).

Advantageously, the slider 29 has an outer groove 30. The outer groove 30 is configured to put the parking line LIII in communication with the discharge T when the slider 29 is in the open position O. In particular, the outer groove 30 is configured to put the signal chamber 14A in communication with the secondary delivery outlet 111 when it is arranged in the open position O.

According to the illustrated example, the outer groove 30 is annular. According to the variants not shown, the outer groove 30 can have different shapes and/or dimensions.

According to the example illustrated in Figures 3 and 4, the slider 29 has a head 31 and a stem 32, the outer groove 30 is interposed between the head 31 and the stem 32. The head 31 faces the inside of the inner cavity 22.

In particular, the inner cavity 22 feels the pressure of the oil leaked through the calibrated dowel 23. The oil under pressure in the inner cavity 22 exerts a closing thrust Fc on the head 31 of the slider 29, i.e. a force that pushes the slider 29 towards the closed position C.

The stem 32 of the slider 29 is connected to an opening assembly 33 which exerts an opening thrust Fa on the stem 32 of the slider 29, i.e. a force that pushes the slider 29 towards the open position O.

The closing thrust Fc and the opening thrust Fa are opposite to each other. The total thrust force R is the result obtained from the opening thrust Fa and the closing thrust Fc. The slider 29 is configured to slide axially in one direction v1, or in the opposite direction v2, according to the direction of the total thrust force R.

Advantageously, the emergency opening assembly 33 is configured to move the slider 29 to the open position O in the event that the closing thrust Fc exerted on the head 31 does not exceed a minimum threshold value.

In fact, this situation is indicative of a pressure loss (therefore of a failure) along the control line CL.

According to the example shown in the Figures, the emergency opening assembly 33 comprises a helical spring 34 fitted around the stem 32 of the slider 29, a shoulder 35 for a first end of the spring 34 and a plate 36 connected to the slider 29 and which acts as an abutment element for a second end of the spring 34. The spring 34 is preloaded and is calibrated so as to exert a predefined opening thrust Fa on the slider 29.

When the oil pressure along the control line CL exceeds a predetermined threshold value, the closing thrust Fc exerted on the head 31 is greater than the opening thrust Fa exerted on the plate 36 of the slider 29. Then, the resulting total thrust force R pushes the slider 29 into the closed position C (as schematized in Figures 4 and 6).

When the pressure in the control line CL drops below a certain threshold value, the opening thrust Fa on the plate 36 is greater than the closing thrust Fc on the head 31 of the slider 29. Then, the resulting total thrust force R pushes the slider 29 into the open position O (not shown).

Advantageously, the drive cartridge 7II further comprises a calibration assembly 37 configured to vary the working pressure of the brake in proportion to the control received from the control delivery Y.

It is noted that the braking force of the drive cartridge 7II must be related to the mass of the towed vehicle VII. Furthermore, the braking force of the drive cartridge 7II must be related to the presence on the towed vehicle VII of one or two oil lines.

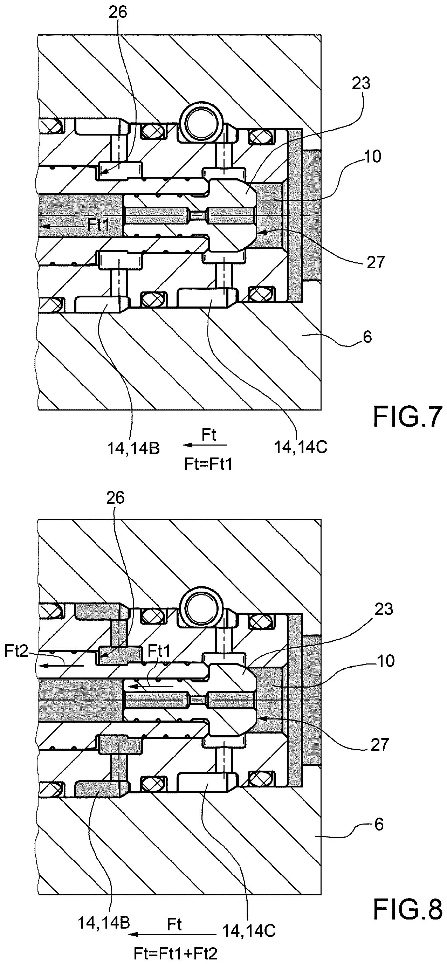

Advantageously, the calibration assembly 37 is regulated by the pin 21. In particular, the pin 21 is configured to exert a variable calibration thrust Ft according to whether the distributor D is connected to a towed vehicle VII having one or two oil lines, as schematically shown in Figures 7 and 8.

The oil under pressure inside the main line LI exerts a basic calibration thrust Ft1, i.e. a force that pushes the pin 21, proportional to the axial thrust surface 27 of the calibrated dowel 23.

In the event that the distributor D is connected to a towed vehicle VII with a single oil line, the selection valve 8 is open and the selection chamber 14B of the dispensing seat 12 is connected to the discharge T.

The oil coming from the main line LI exerts a calibration thrust Ft which corresponds to the basic calibration thrust Ft1 exerted on the calibrated dowel 23 of the pin 21.

According to what is shown schematically in Figure 8, if the distributor D is connected to a towed vehicle VII having two oil lines, the selection valve 8 is closed and the selection chamber 14B receives oil under pressure from the drive line 19. Therefore, inside the selection chamber 14B the oil is at a pressure equal to that of the main line LI. The oil under pressure inside the selection chamber 14B fills the respective inner selection chamber 16B through one or more radial channels 15. The oil under pressure inside the inner selection chamber 16B exerts an auxiliary thrust Ft2 on the outer thrust surface 26 of the pin 21.

Therefore, when the selection valve 8 is closed, the oil coming from the main line LI exerts both a basic calibration thrust Ft1 on the calibrated dowel 23 of the pin 21 and an auxiliary thrust Ft2 on the outer surface 26 of the pin 21. In this case, therefore, the calibration thrust Ft corresponds to the sum of the basic calibration thrust Ft1 and the auxiliary thrust Ft2.

$$Ft = \overrightarrow{Ft1} + \overrightarrow{Ft2}$$

As illustrated in Figures 3 and 4, the calibration assembly 37 is configured to act axially on the pin 21 and is configured to make the braking action proportional with respect to the pressure on the control line CL. In other words, the calibration assembly 37 keeps the pin 21 in a predefined working position along the longitudinal axis A, maintaining the balance between the calibration thrust and the thrust of the calibration assembly 37 itself.

When the calibration assembly 37 reaches the mechanical lock condition, the oil pressure to which the pin 21 is subjected remains within the limits imposed by the EU 167/2013 regulations or that prior to 2016.

The drive cartridge 711 further comprises a braking piston 38A on which the axial thrust of the drive assembly 110 acts. According to the example shown in the Figures, the braking piston 38A is part of the calibration assembly 37. The calibration assembly 37 further comprises a shoulder element 38B and elastic return means 39 interposed between the braking piston 38A and the shoulder element 38B.

The braking piston 38A and the shoulder element 38B are housed inside the main dispensing chamber 9 and are axially movable along said main dispensing chamber 9. The shoulder element 38B is axially interposed between the braking piston 38A and the main dispensing seat 12.

The braking piston 38A is an axial-symmetric body and substantially has the shape of a cup body.

According to the illustrated example, the braking piston 38A has a through hole 40 inside which the stem 32 of the slider 29 is inserted.

The shoulder element 38B rests on the pin 21 and is translated along the axis A according to the balance of forces generated by each single braking.

According to the illustrated example, the shoulder element 38B has an axial-symmetric body with a central hole 41. The slider 29 is mounted movable through the central hole 41.

According to the illustrated example, the elastic return means 39 are springs. Advantageously, according to the illustrated example, the calibration assembly 37 comprises two helical springs 42. The helical springs 42 are fitted around the slider 29. Advantageously, the helical springs 42 have outer diameters different from each other, so that one can be mounted inside the other and are coaxial with each other. In particular, the helical spring 34 of the emergency opening assembly 33 is at one end against the braking piston 38A of the calibration assembly 37. Advantageously, the spring 34 of the emergency opening assembly 33 is coaxial with the springs 42 of the calibration assembly 37 and has a diameter such as to be able to be placed inside the other springs 42. According to the example illustrated in Figures 3 and 4, the calibration assembly 37 comprises three coaxial springs 42 mounted one inside the other. The innermost spring 34 is the spring 34 of the emergency opening assembly 33 and pushes the slider 29. The two outermost springs 42 are of the calibration assembly 37 and push the shoulder element 38B.

The main dispensing chamber 9 has a shaft stop ring 43 configured to axially constrain the seat 12.

The ring 43 divides the main dispensing chamber 9 into a control chamber 44 and a drive chamber 45. The drive chamber 45 is in communication with the main line LI and houses the dispensing seat 12, as described above. The drive chamber 44 houses the calibration assembly 37 and is in communication with the drive assembly 110.

It can be seen that the drive assembly 110 according to the illustrated example is of the hydraulic type, according to variants not shown, it can be selected from a group of drive assemblies different from each other by type. For example, the drive assembly 110 may alternatively be mechanical, pneumatic, electronic, magnetic, electromagnetic, and the like.

The solution described above allows overcoming the problem that, in use, a towed vehicle VII implemented according to the old regulation would be late in the intervention, when instead, by law, it must be in advance (the towed vehicle VII, when the agricultural or forestry vehicle VI is braked, should not push it, but pull it). To overcome this drawback, the selection valve 8 advantageously modifies the internal balance of the forces of the calibration cartridge 711.

Therefore, the EU 167/2013 regulation, substantially changing the way in which the braking systems operate and also their construction (two lines under pressure instead of a single line under pressure), as a first consequence, causes a difference in the braking response behavior of towed vehicles.

Advantageously, the switching system 17 of the type described above allows regulating the braking action of the distributor D itself according to whether it is connected to a towed vehicle VII according to the old or the EU 167/2013 regulation and contributes to ensuring braking compliance by the distributor D with both the old regulation and the EU 167/2013 regulation.

As shown schematically in Figure 5, the distributor D further comprises an emergency control 46 which can be operated directly by an operator, for example a handbrake.

In use, the distributor D is connected to a towed vehicle VII which can be built according to the old regulation or to the EU 167/2013 regulation. The operation of the distributor D will be described below according to the type of towed vehicle VII.

USE OF THE DISTRIBUTOR D ON BOARD A TOWED VEHICLE VII IMPLEMENTED ACCORDING TO THE EU 167/2013 REGULATION, OR COMPRISING A MAIN HIGH-PRESSURE OIL LINE LI AND AN ADDITIONAL LOW-PRESSURE OIL LINE LII

During braking, an operator acting on the brake pedal, or on the control delivery Y, of the agricultural or forestry vehicle VI activates the drive assembly 110 by sliding the braking piston 38A into a braking position and, consequently, bringing the seat 12 in a working position L so as to close the connection with the discharge T. Therefore, the oil pressure in the control line CL as well as in the drive cartridge 711 increases.

Consequently, the drive cartridge 711 moves to a delivery position, in which high pressure oil is sent to the towed vehicle VII.

At the same time, along the secondary line LII, the low pressure oil is fed by the additional delivery PII and is conveyed to the towed vehicle VII.

It is noted that a towed vehicle VII according to the EU 167/2013 regulation comprises a parking braking system (of a known type and not shown) which is configured to block the wheels of the towed vehicle VII when it is not connected to an agricultural or forestry vehicle VI. In other words, the parking braking system is configured to block the wheels of the towed vehicle VII when it is not supplied with pressurized oil.

USE OF THE DISTRIBUTOR D ON BOARD A TOWED VEHICLE VII IMPLEMENTED ACCORDING TO THE OLD REGULATION, OR A TOWED VEHICLE VII LACKING THE ADDITIONAL LOW-PRESSURE OIL LINE LII

In use, the selection valve 8 allows modifying the braking features to adapt the behavior of the distributor D to the regulation prior to EU 167/2013. In particular, the aim is to ensure that the towed vehicle VII anticipates braking with respect to the agricultural or forestry vehicle VI.

Advantageously, the main dispensing seat 12 can be replaced with another one of different dimensions (in particular with a different outer thrust surface 26 or different axial thrust surface 27), so as to obtain the correct braking ratio required for agricultural or forestry vehicles VI of different specific weights.

USE OF DISTRIBUTOR D TO OPERATE THE PARKING BRAKING SYSTEM

It should be noted that the towed vehicles VII according to the old regulation, in addition to not providing an additional low-pressure oil line LII, require a minimum value of the oil pressure for the release of the parking braking system. For example, for the old Italian regulation it is necessary to send oil at a minimum pressure of 10 bar in order to release the brakes and about 150 bar are required to obtain maximum braking.

Generally, when a towed vehicle VII is connected to a system 1, in particular to the distributor D, of an agricultural or forestry vehicle VI, the low-pressure oil coming from the additional line LII is used to act on the parking braking system, so as to release the wheels of the towed vehicle VII. If the delivery of oil to the towed vehicle VII is interrupted, the parking braking system is activated, in a known manner, for braking the wheels of the towed vehicle VII.

In the event of a failure, for example an oil leak, along the control line CL, upon braking the slider 29 connects the parking line LIII with the discharge T. Therefore, the inner chamber 16A is emptied and consequently, the main dispensing chamber 9 also does, causing the main dispensing seat 12 to slide. However, the pressure inside the main dispensing chamber 9 does not increase, due to the failure along the control line CL. The main dispensing seat 12, not being subjected to the action of contrasting the oil pressure in the main dispensing chamber 9, continues to slide until it reaches an emergency position. In the emergency position, the main dispensing seat 12 causes the connection to the discharge T also of the parking line LIII. In this way, the delivery of low-pressure oil to the towed vehicle VII is interrupted, automatically activating the parking system of the towed vehicle VII.

Therefore, the distributor D has the advantage of guaranteeing, in the case of application to a vehicle built according to the old regulations, a minimum pre-established pressure for releasing the braking system. In addition, the distributor D allows the braking action of the towed vehicles VII to be re-modulated according to the old regulations as desired, according to the type of compensation seat installed.

The distributor D also has the advantage of guaranteeing the activation of towed vehicles VII according to the EU 167/2013 regulation and of providing automatic braking in case of failure along the control line CL.

The drive cartridge 711 of the distributor D has the advantage of having integrated therein the detection system of any anomalies.

The drive cartridge 711 of the type described above has the advantage of being compact, with a consequent reduction in the overall dimensions of the distributor D.

The drive cartridge 711 of the type described above has the advantage of being able to be regulated remotely, therefore, the distributor D can be remote-controlled, that is to say, positioned far from an attachment area with a towed vehicle VII.

The drive cartridge 711 of the type described above has the advantage that it can be easily customized for the different types of towed vehicles VII, by modifying the extension of the outer thrust surface 26 and/or the axial thrust surface 27.

The drive cartridge 7II has the advantage of being simpler and having fewer components than a main brake valve of a known type.

The drive cartridge 7II has the advantage that the calibration takes place not by modifying the drive assembly 110 (as occurs in systems of the known type) but by modifying the thrust surface exposed to the main line LI.

From the foregoing, it follows that the distributor D and the system 1 of the type described above are particularly effective and versatile. Furthermore, they guarantee an economic advantage for the user who can install a distributor D on a towed vehicle VII, regardless of whether it is made according to the new or old regulations. The distributor D and the system 1 of the type described above are more compact and versatile than those of the known type.

## Claims

1. An oleodynamic braking distributor for an agricultural or forestry vehicle (VI) comprising a body (6) where a slide valve (711) is obtained, arranged to control the operation of a servo-valve (71); said servo-valve (71) being configured to control a towed vehicle (VII) connected, in use, to said agricultural or forestry vehicle (VI); wherein said body (6) of the distributor (D) has a dispensing chamber (9) having, in turn, a first inlet (10) for a first high-pressure oil delivery (PI) and a first outlet (11) for the discharge; wherein the dispensing chamber (9) further has a drive assembly (110) operated by a control oil delivery (Y) and a second outlet (111) for the discharge (T); wherein the slide valve (711) comprises a first seat (12), which is arranged inside said dispensing chamber (9) and is interposed between said first inlet (10) and said first outlet (11); **characterised in that** the distributor (D) comprises a switching system (17), which is configured to change, depending on the type of towed vehicle (VII) connected to the distributor (D), the surface of said first seat (12) exposed to the oil coming from the first high-pressure oil delivery (PI).

2. A distributor according to claim 1, wherein the distributor (D) comprises two attachments (2; 21; 211), each configured to be coupled, in use, to a respective joint (3; 31; 311) of a towed vehicle (VII); wherein the distributor (D) comprises detection means (5) to determine the number of attachments (2; 21, 211) engaged, in use, by respective joints (3; 31; 311) of the towed vehicle (VII); wherein said attachments (2; 21; 211) are external to the body (6) of the distributor (D) and are connected to said body (6) of the distributor (D) by means of respective lines (4; 4I; 4II); wherein said switching system (17) is electro-operated by said detection means (5).

3. A distributor according to claim 1 or 2, wherein the first seat (12) comprises an auxiliary thrust surface (26) facing the inside of a respective selection chamber (14B); wherein the switching system (17) is configured to establish a communication between said selection chamber (14B) and the first high-pressure oil delivery (PI), or the discharge (T), in function of the type of towed vehicle (VII) connected to the distributor (D).

4. A distributor according to claim 3, wherein the first seat (12) comprises a tubular body (6) having a groove (114), which delimits a respective selection chamber (14B) inside the dispensing chamber (9);

wherein the distributor (D) has a passage channel (18), which connects said selection chamber (14B) to a discharge (T); wherein the switching system (17) comprises a selection valve (8) interposed along said passage channel (18); wherein the selection valve (8) is configured to open or close said passage channel (18), as a function of the type of towed vehicle (VII).

5. A distributor according to claim 4, wherein the distributor (D) has a drive line (19), which connects said passage channel (18) to the first high-pressure oil delivery (PI); wherein the fitting between the passage channel (18) and the drive line (19) is interposed between the selection chamber (14B) and said selection valve (8); the distributor (D) having an adjusted orifice (20) arranged along said drive line (19).

6. A distributor according to claim 4, wherein the oil coming from the first high-pressure oil delivery (PI) is tapped and returned into each selection chamber (14B) through channels obtained between said first seat (12) and said dispensing chamber (9).

7. A distributor according to any of the preceding claims, wherein the first slide valve (711) comprises a parking braking system.

8. A distributor according to any of the preceding claims, wherein the dispensing chamber (9) has a signal camber (14A) in communication with a third oil inlet (210) at a parking pressure; wherein said slide valve (711) comprises an opening system, which is configured to establish a communication between the second outlet (111) of the discharge (T) and the oil coming from said third parking inlet (210), when the pressure of the oil coming from the first high-pressure delivery (PI) is below a predetermined value.

9. A distributor according to claim 8, wherein the first seat (12) has an inner cavity (22); said slide valve (711) comprising a slider (29), which is movable inside said inner cavity (22) from a closing position (C) to an opening position (O) and vice versa; wherein said first seat (12) has a radial hole (28), which establishes a communication between said third oil inlet (210) at the parking pressure and the inner cavity (22); wherein said slider (29) has a groove (30), which is configured to establish a communication between said signal chamber (14A) and the second outlet (111) for the discharge (T), when it is arranged in the opening position (O); wherein said opening system is configured to selectively move said slider (29) inside said inner cavity (22) .

10. A distributor according to claim 9, wherein the slider (29) has a head (31) facing the first high-pressure oil delivery (PI); wherein the opening system comprises preloaded elastic means (34), which are configured to exert an opening thrust (Fa) upon the slider (29); wherein said opening thrust (Fa) is configured to push the slider (29) to the opening position (O) when the pressure of the oil coming from the first pressurized oil delivery (PI) is below a predetermined value.

11. A distributor according to any of the preceding claims and comprising a calibration assembly (37); wherein the calibration assembly (37) comprises a braking piston (38A), which is movable along the dispensing chamber (9) due to the action of the drive assembly (110); the calibration assembly (37) comprising elastic return means (42) interposed between said first seat (12) and said braking piston (38A).

12. A distributor according to claim 11, wherein said elastic return means (42) of the calibration assembly (37) are a plurality of helical springs having different outer diameters; wherein said springs (42) are inserted inside one another and are arranged around said slider (29).

13. An oleodynamic braking system of an agricultural or forestry vehicle (VI) comprising an oleodynamic distributor (D) according to any of the preceding claims.


**Patentansprüche**

1. Öldynamischer Bremsverteiler für ein landwirtschaftliches oder forstwirtschaftliches Fahrzeug (VI), mit einem Körper (6), in dem ein Schieberventil (711) enthalten ist, das dazu angeordnet ist, den Betrieb eines Servoventils (71) zu steuern; wobei das Servoventil (71) dazu ausgebildet ist, ein gezogenes Fahrzeug (VII) zu steuern, welches im Gebrauch mit dem landwirtschaftlichen oder forstwirtschaftlichen Fahrzeug (VI) verbunden ist; wobei der Körper (6) des Verteilers (D) eine Ausgabekammer (9) aufweist, die ihrerseits einen ersten Einlass (10) für eine erste Hochdruck-Ölzufuhr (PI) und einen ersten Auslass (11) für die Ausgabe aufweist; wobei die Ausgabekammer (9) ferner eine Antriebsanordnung (110), die durch eine Steuerölzufuhr (Y) betrieben ist, und einen zweiten Auslass (111) für die Ausgabe (T) aufweist; wobei das Schieberventil (711) einen ersten Sitz (12) aufweist, der innerhalb der Ausgabekammer (9) angeordnet ist und zwischen dem ersten Einlass (10) und dem ersten Auslass (11) angeordnet ist,

   **dadurch gekennzeichnet, dass**
   der Verteiler (D) ein Schaltsystem (17) aufweist, das dazu ausgebildet ist, abhängig von dem Typ des mit dem Verteiler (D) verbundenen gezogenen Fahrzeugs (VII), die Oberfläche des ersten Sitzes (12), welche dem von der ersten Hochdruck-Ölzufuhr (PI) kommenden Öl ausgebsetzt ist.

2. Verteiler nach Anspruch 1, bei welchem der Verteiler (D) zwei Anbauteile (2; 2I; 2II) aufweist, die jeweils dazu ausgebildet sind, im Gebrauch mit einem entsprechenden Anschluss (3; 3I; 3II) eines gezogenen Fahrzeugs (VII) verbunden zu werden; wobei der Verteiler (D) Detektionseinrichtungen (5) zur Bestimmung der Anzahl von Anbauteilen (2; 2I, 2II), die im Gebrauch mit jeweiligen Anschlüssen (3; 3I; 3II) des gezogenen Fahrzeugs (VII) in Eingriff stehen, aufweist; wobei sich die Anbauteile (2; 21; 211) außerhalb des Körpers (6) des Verteilers (D) befinden und mit dem Körper (6) des Verteilers (D) durch jeweilige Leitungen (4; 4I; 4II) verbunden sind; wobei das Schaltsystem (17) durch die Detektionseinrichtungen (5) elektrisch betrieben ist.

3. Verteiler nach Anspruch 1 oder 2, bei welchem der erste Sitz (12) eine zusätzliche Anlauffläche (26) aufweist, die dem Inneren einer jeweiligen Auswahlkammer (14B) zugewandt ist; wobei das Schaltsystem (17) Dazu ausgebildet ist, eine Verbindung zwischen der Auswahlkammer (14B) und der ersten Hochdruck-Ölzufuhr (PI) oder dem Auslass (T) in Abhängigkeit vom Typ des mit dem Verteiler (D) verbundenen gezogenen Fahrzeugs (VII) herzustellen.

4. Verteiler nach Anspruch 3, bei welchem der erste Sitz (12) einen rohrförmigen Körper (6) mit einer Nut (114) aufweist, welche eine jeweilige Auswahlkammer (14B) innerhalb der Ausgabekammer (9) begrenzt; wobei der Verteiler (D) einen Durchgangskanal (18) aufweist, welcher die Auswahlkammer (14B) mit einem Auslass (T) verbindet; wobei das Schaltsystem (17) ein Auswahlventil (8) aufweist, welches entlang des Durchgangskanals (18) angeordnet ist; wobei das Auswahlventil (8) dazu ausgebildet ist, den Durchgangskanal (18) in Abhängigkeit von dem Typ des gezogenen Fahrzeugs (VII) zu öffnen oder zu schließen.

5. Verteiler nach Anspruch 4, bei welchem der Verteiler (D) eine Antriebsleitung (19) aufweist, welche den Durchgangskanal (18) mit der ersten Hochdruck-Ölzufuhr (PI) verbindet; wobei das Verbindungsstück zwischen dem Durchgangskanal (18) und der Antriebsleitung (19) zwischen der Auswahlkammer (14B) und dem Auswahlventil (8) angeordnet ist; wobei der Verteiler (D) eine angepasste Öffnung (20) aufweist, die entlang der Antriebsleitung (19) angeordnet ist.

6. Verteiler nach Anspruch 4, bei welchem das von der ersten Hochdruck-Ölzufuhr (PI) kommende Öl abgezapft und durch Kanäle, die zwischen dem ersten Sitz (12) und der Ausgabekammer (9) gebildet sind, in jede Auswahlkammer (14B) zurückgeführt wird.

7. Verteiler nach einem der vorhergehenden Ansprüche, bei welchem das erste Schieberventil (711) ein Feststellbremssystem aufweist.

8. Verteiler nach einem der vorhergehenden Ansprüche, bei welchem die Ausgabekammer (9) eine Signalkammer (14A) in Verbindung mit einem dritten Öleinlass (210) bei einem Parkdruck aufweist; wobei das Schieberventil (711) ein Öffnungssystem aufweist, das dazu ausgebildet ist, eine Verbindung zwischen dem zweiten Auslass (111) des Auslasses (T) und dem von dem dritten Parkeinlass (210) kommenden Öl herzustellen, wenn der Druck des aus der ersten Hochdruck-Ölzufuhr (PI) kommenden Öls unter einem vorgegebenen Wert liegt.

9. Verteiler nach Anspruch 8, bei welchem der erste Sitz (12) einen inneren Hohlraum (22) aufweist; wobei das Schieberventil (711) einen Schieber (29) aufweist, der in dem inneren Hohlraum (22) von einer Schließposition (C) in eine Öffnungsposition (O) und umgekehrt bewegbar ist; wobei der erste Sitz (12) ein radiales Loch (28) aufweist, das eine Verbindung zwischen dem dritten Öleinlass (210) bei dem Parkdruck und dem inneren Hohlraum (22) herstellt; wobei der Schieber (29) eine Nut (30) aufweist, die dazu ausgebildet ist, eine Verbindung zwischen der Signalkammer (14A) und dem zweiten Auslass (111) für den Auslass (T) herzustellen, wenn der Schieber in der Öffnungsposition (O) angeordnet ist; wobei das Öffnungssystem dazu ausgebildet ist, den Schieber (29) selektiv innerhalb des inneren Hohlraums (22) zu bewegen.

10. Verteiler nach Anspruch 9, bei welchem der Schieber (29) einen Kopf (31) aufweist, welcher der ersten Hochdruck-Ölzufuhr (PI) zugewandt ist; wobei das Öffnungssystem vorgespannte elastische Einrichtungen (34) aufweist, die dazu ausgebildet sind, einen Öffnungsschub (Fa) auf den Schieber (29) auszuüben; wobei der Öffnungsschub (Fa) dazu ausgebildet ist, den Schieber (29) in die Öffnungsposition (O) zu drücken, wenn der Druck des von der ersten Druck-Ölzufuhr (PI) kommenden Öls unter einem vorbestimmten Wert liegt.

11. Verteiler nach einem der vorhergehenden Ansprüche und mit einer Kalibrieranordnung (37); wobei die Kalibrieranordnung (37) einen Bremskolben (38A) aufweist, der aufgrund der Wirkung der Antriebsanordnung (110) entlang der Ausgabekammer (9) bewegbar ist; wobei die Kalibrieranordnung (37) elastische Rückstelleinrichtungen (42) aufweist, welche zwischen dem ersten Sitz (12) und dem Bremskolben (38A) angeordnet sind.

12. Verteiler nach Anspruch 11, bei welchem die elastischen Rückstelleinrichtungen (42) der Kalibrieranordnung (37) mehrere Schraubenfedern mit unterschiedlichen Außendurchmessern sind; wobei die Federn (42) ineinander eingesetzt und um den Schieber (29) herum angeordnet sind.

13. Öldynamisches Bremssystem eines landwirtschaftlichen oder forstwirtschaftlichen Fahrzeugs (VI) mit einem öldynamischen Verteiler (D) nach einem der vorhergehenden Ansprüche.

**Revendications**

1. Distributeur oléodynamique de freinage pour un véhicule agricole ou forestier (VI) comprenant un corps (6) où un tiroir (7II) est obtenu, agencé pour commander le fonctionnement d'une servovalve (7I) ; ladite servovalve (7I) étant configurée pour commander un véhicule tracté (VII) relié, en service, audit véhicule agricole ou forestier (VI) ; dans lequel ledit corps (6) du distributeur (D) présente une chambre de distribution (9) présentant, à son tour, une première entrée (10) pour une première alimentation en huile à haute pression (PI) et une première sortie (11) pour la décharge ; dans lequel la chambre de distribution (9) présente en outre un ensemble d'entraînement (110) actionné par une alimentation en huile de commande (Y) et une seconde sortie (111) pour la décharge (T) ; dans lequel le tiroir (7II) comprend un premier siège (12), qui est agencé à l'intérieur de ladite chambre de distribution (9) et est interposé entre ladite première entrée (10) et ladite première sortie (11) ;

   **caractérisé en ce que**
   le distributeur (D) comprend un système de commutation (17), qui est configuré pour modifier, selon le type de véhicule tracté (VII) relié au distributeur (D), la surface dudit premier siège (12) exposée à l'huile provenant de la première distribution d'huile à haute pression (PI).

2. Distributeur selon la revendication 1, dans lequel le distributeur (D) comprend deux attelages (2 ; 2I ; 2II), chacun conçu pour être accouplé, en service, à un assemblage respectif (3 ; 3I ; 3II) d'un véhicule tracté (VII) ; dans lequel le distributeur (D) comprend des moyens de détection (5) pour déterminer le nombre d'attelages (2 ; 2I, 2II) en prise, en service, par des assemblages respectifs (3 ; 3I ; 3II) du véhicule tracté (VII) ; dans lequel lesdits attelages (2 ; 2I ; 2II) sont extérieurs au corps (6) du distributeur (D) et sont reliés audit corps (6) du distributeur (D) au moyen de lignes respectives (4 ; 4I ; 4II) ; dans lequel ledit système de commutation (17) est électro-actionné par lesdits moyens de détection (5).

3. Distributeur selon la revendication 1 ou 2, dans lequel le premier siège (12) comprend une surface de poussée auxiliaire (26) orientée vers l'intérieur d'une chambre de sélection respective (14B) ; dans lequel le système de commutation (17) est configuré pour établir une communication entre ladite chambre de sélection (14B) et la première alimentation en huile à haute pression (PI), ou la décharge (T), en fonction du type de véhicule tracté (VII) relié au distributeur (D).

4. Distributeur selon la revendication 3, dans lequel le premier siège (12) comprend un corps tubulaire (6) présentant une rainure (114), qui délimite une chambre de sélection associée (14B) à l'intérieur de la chambre de distribution (9) ; dans lequel le distributeur (D) présente un canal de passage (18), qui relie ladite chambre de sélection (14B) à une décharge (T) ; dans lequel le système de commutation (17) comprend une vanne de sélection (8) interposée le long dudit canal de passage (18) ; la vanne de sélection (8) étant conçue pour ouvrir ou fermer ledit canal de passage (18), en fonction du type de véhicule tracté (VII).

5. Distributeur selon la revendication 4, dans lequel le distributeur (D) présente une ligne d'entraînement (19), qui relie ledit canal de passage (18) à la première alimentation en huile à haute pression (PI) ; dans lequel le raccord entre le canal de passage (18) et la ligne d'entraînement (19) est interposé entre la chambre de sélection (14B) et ladite vanne de sélection (8) ; le distributeur (D) présentant un orifice ajusté (20) agencé le long de ladite ligne d'entraînement (19).

6. Distributeur selon la revendication 4, dans lequel l'huile provenant de la première alimentation en huile à haute pression (PI) est prélevée et renvoyée dans chaque chambre de sélection (14B) par des canaux obtenus entre ledit premier siège (12) et ladite chambre de distribution (9).

7. Distributeur selon l'une quelconque des revendications précédentes, dans lequel le premier tiroir (7II) comprend un système de freinage de stationnement.

8. Distributeur selon l'une quelconque des revendications précédentes, dans lequel la chambre de distribution (9) présente une chambre de signal (14A) en communication avec une troisième entrée d'huile (210) à une pression de stationnement ; dans lequel ledit tiroir (7II) comprend un système d'ouverture, qui est conçu pour établir une communication entre la seconde sortie (111) de décharge (T) et l'huile provenant de ladite troisième entrée de stationnement (210), lorsque la pression de l'huile provenant de la première alimentation à haute pression (PI) est inférieure à une valeur prédéterminée.

9. Distributeur selon la revendication 8, dans lequel le premier siège (12) présente une cavité intérieure (22) ; ledit tiroir (7II) comprenant un coulisseau (29), qui est mobile à l'intérieur de ladite cavité intérieure (22) d'une position de fermeture (C) à une position d'ouverture (O) et vice versa ; dans lequel ledit premier siège (12) présente un trou radial (28), qui établit une communication entre ladite troisième entrée d'huile (210) à la pression de stationnement et la cavité intérieure (22) ; dans lequel ledit coulisseau (29) présente une rainure (30), qui est conçue pour établir une communication entre ladite chambre de signal (14A) et la seconde sortie (111) pour la décharge (T), lorsqu'elle est agencée dans la position d'ouverture (O) ; dans lequel ledit système d'ouverture est conçu pour déplacer sélectivement ledit coulisseau (29) à l'intérieur de ladite cavité intérieure (22).

10. Distributeur selon la revendication 9, dans lequel le coulisseau (29) présente une tête (31) orientée vers la première alimentation en huile à haute pression (PI) ; dans lequel le système d'ouverture comprend des moyens élastiques préchargés (34), qui sont conçus pour exercer une poussée d'ouverture (Fa) sur le coulisseau (29) ; dans lequel ladite poussée d'ouverture (Fa) est conçue pour pousser le coulisseau (29) vers la position d'ouverture (O) lorsque la pression de l'huile provenant de la première alimentation en huile sous pression (PI) est inférieure à une valeur prédéterminée.

11. Distributeur selon l'une quelconque des revendications précédentes et comprenant un ensemble d'étalonnage (37) ; dans lequel l'ensemble d'étalonnage (37) comprend un piston de freinage (38A), qui est mobile le long de la chambre de distribution (9) en raison de l'action de l'ensemble d'entraînement (110) ; l'ensemble d'étalonnage (37) comprenant des moyens de rappel élastiques (42) interposés entre ledit premier siège (12) et ledit piston de freinage (38A).

12. Distributeur selon la revendication 11, dans lequel lesdits moyens de rappel élastiques (42) de l'ensemble d'étalonnage (37) sont une pluralité de ressorts hélicoïdaux présentant des diamètres extérieurs différents ; dans lequel lesdits ressorts (42) sont insérés les uns dans les autres et sont disposés autour dudit coulisseau (29).

13. Système de freinage oléodynamique d'un véhicule agricole ou forestier (VI) comprenant un distributeur oléodynamique (D) selon l'une quelconque des revendications précédentes.

FIG.1

FIG.2

EP 3 736 189 B1

FIG.3

FIG.4

FIG.5

FIG.6

EP 3 736 189 B1

18

FIG.7

14,14B  Ft  14,14C
Ft=Ft1

FIG.8

14,14B  Ft  14,14C
Ft=Ft1+Ft2

**EP 3 736 189 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT 102019000004361
- EP 0400432 A1
- EP 3202629 A1